# EUROPEAN PATENT APPLICATION

(11) **EP 4 851 816 A1**
(43) Date of publication of application: **09.12.2026**
(21) Application number: 25843257.4
(22) Date of filing: 24.03.2025
(51) Int. Cl.: G06F 15/163

(54) **INTER-CORE COMMUNICATION METHOD AND APPARATUS, AND MEDIUM, ELECTRONIC DEVICE AND MULTI-CORE SYSTEM**

(30) Priority: 23.07.2024 CN 202410992342
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: YANG, Peijun, Ningbo, Zhejiang 315899 (CN); TANG, Jinbao, Ningbo, Zhejiang 315899 (CN); ZHENG, Ke, Ningbo, Zhejiang 315899 (CN)
(74) Representative: Elzaburu S.L.P.
(86) International application number: PCT/CN2025/084287
(87) International publication number: WO 2026/020865

(57) **Abstract**

The present application discloses an inter-core communication method and apparatus, and a medium, an electronic device and a multi-core system. The method includes: selecting a first target application from local applications (S11); selecting a first data id from a plurality of preset data ids according to the first target application, and selecting a target second CPU core from one or more preset second CPU cores according to the first target application; generating first byte stream data according to the first data id, and sending the first byte stream data to the target second CPU core, to cause the target second CPU core to generate a second data id and feedback data based on the first byte stream data (S13); and receiving the second data id fed back by the target second CPU core, receiving the feedback data fed back by the target second CPU core according to the second data id, and controlling the first target application to run based on the feedback data (S14). The method can achieve convenient inter-core communication.

## Description

### CROSS-REFERENCE TO RELATED APPLICATIONS

This application claims priority to Chinese Patent Application No. 202410992342.X, filed with the China National Intellectual Property Administration on July 23, 2024 and entitled "INTER-CORE COMMUNICATION METHOD AND APPARATUS, AND MEDIUM, ELECTRONIC DEVICE AND MULTI-CORE SYSTEM", which is incorporated herein by reference in its entirety.

### TECHNICAL FIELD

The present application relates to the technical field of inter-core communication, and in particular, to an inter-core communication method and apparatus, and a medium, an electronic device and a multi-core system.

### BACKGROUND

With the rapid development of intelligent technologies for new energy vehicles, chips mounted on vehicles are becoming richer and richer. Different CPU (Central Processing Unit, central processing unit) cores may be located on the same chip or on different chips. These CPU cores may be heterogeneous or homogeneous, and operating systems mounted on the CPU cores may also be different. In order to efficiently satisfy diversified user requirements and functions, it is necessary to provide a data transmission and communication mechanism for performing inter-core communication between different CPU cores.

### SUMMARY

The present application aims to solve at least one of the technical problems in the related art to a certain extent. To this end, a first object of the present application is to provide an inter-core communication method, so as to realize convenient inter-core communication.

A second object of the present application is to provide a computer-readable storage medium.

A third object of the present application is to provide an electronic device.

A fourth object of the present application is to provide an inter-core communication apparatus.

A fifth object of the present application is to provide a multi-core system.

In order to achieve the above objects, an embodiment of a first aspect of the present application provides an inter-core communication method, where the method is applied to a first CPU core, and includes: selecting a first target application from local applications; selecting a first data id from a plurality of preset data ids according to the first target application, and selecting a target second CPU core from one or more preset second CPU cores according to the first target application; generating first byte stream data according to the first data id, and sending the first byte stream data to the target second CPU core, to cause the target second CPU core to generate a second data id and feedback data based on the first byte stream data; and receiving the second data id fed back by the target second CPU core, receiving the feedback data fed back by the target second CPU core according to the second data id, and controlling the first target application to run based on the feedback data.

An embodiment of a second aspect of the present application provides a computer-readable storage medium, having a computer program stored thereon, where when the computer program is executed by a processor, the above-mentioned inter-core communication method is implemented.

An embodiment of a third aspect of the present application provides an electronic device, including a memory, a processor, and a computer program stored on the memory and executable on the processor, where when the computer program is executed by the processor, the above-mentioned inter-core communication method is implemented.

A fourth object of the present application is to provide an inter-core communication apparatus, including: a selection module, configured to select a first target application from local applications, select a first data id from a plurality of preset data ids according to the first target application, and select a target second CPU core from one or more preset second CPU cores according to the first target application; a generation module, configured to generate first byte stream data according to the first data id; a sending module, configured to send the first byte stream data to the target second CPU core, to cause the target second CPU core to generate a second data id and feedback data based on the first byte stream data; a receiving module, configured to receive the second data id fed back by the target second CPU core, and receive the feedback data fed back by the target second CPU core according to the second data id; and a control module, configured to control the first target application to run based on the feedback data.

A fifth object of the present application is to provide a multi-core system, including a plurality of CPU cores, where for any one of the plurality of CPU cores, the above-mentioned electronic device is included.

According to the inter-core communication method and apparatus, and the medium, the electronic device and the multi-core system of the embodiments of the present application, it is set to select a first target application from local applications; select a first data id from a plurality of preset data ids according to the first target application, and select a target second CPU core from one or more preset second CPU cores according to the first target application; generate first byte stream data according to the first data id, and send the first byte stream data to the target second CPU core, to cause the target second CPU core to generate a second data id and feedback data based on the first byte stream data; and receive the second data id fed back by the target second CPU core, receive the feedback data fed back by the target second CPU core according to the second data id, and control the first target application to run based on the feedback data. Since the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API (Application Programming Interface, application programming interface) and providing a unified inter-core communication interface for upper-layer users, i.e., a set of API and SDK (Software Development Kit, software development kit), which greatly facilitates the use by upper-layer development users and realizes convenient inter-core communication.

Additional aspects and advantages of the present application will be partly given in the following description, and part will become apparent from the following description, or be learned through the practice of the present application.

### BRIEF DESCRIPTION OF DRAWINGS

FIG. 1 is a flowchart of an inter-core communication method according to an embodiment of the present application.
FIG. 2 is a schematic diagram of an inter-core communication system architecture according to an embodiment of the present application.
FIG. 3 is a schematic diagram of an inter-core communication system architecture according to an example of the present application.
FIG. 4 is a schematic diagram of an inter-core communication system architecture according to another example of the present application.
FIG. 5 is a schematic diagram of an inter-core communication method according to an example of the present application.
FIG. 6 is a structural block diagram of an electronic device according to an embodiment of the present application.
FIG. 7 is a structural block diagram of an inter-core communication apparatus according to an embodiment of the present application.
FIG. 8 is a structural block diagram of a multi-core system according to an embodiment of the present application.

### DESCRIPTION OF EMBODIMENTS

In the vehicle-mounted field, there are three mechanisms for implementing inter-core communication. The main difference lies in the link used for underlying data transmission. There are SPI (Serial Peripheral Interface, serial peripheral interface) physical bus-based implementations, PCIe (Peripheral Component Interconnect Express, peripheral component interconnect express) bus-based implementations, and shared memory-based implementations.

SPI physical bus-based inter-core communication adopts an SPI bus technology, which is a synchronous serial communication protocol mainly used for communication between chips. SPI bus communication requires at least two devices, one master device and one slave device. In a multi-core processor system, each core can serve as a master device or a slave device, and therefore inter-core communication can be realized through the SPI bus.

PCIe-based inter-core communication adopts a PCIe bus for data transmission, which is a high-speed serial bus mainly used for connecting various devices inside a computer, including hard disks, graphics cards, network cards, etc. In a multi-core processor, each core can serve as an endpoint of the PCIe bus, and therefore inter-core communication can be realized through the PCIe bus.

Shared memory-based inter-core communication adopts a shared memory for data transmission. The shared memory is a memory sharing mechanism provided by a linux operating system, which allows different processes or threads to access the same memory, thereby realizing data sharing and communication. In a multi-core processor system, each core can access the shared memory, and therefore inter-core communication can be realized through the shared memory.

These three methods respectively use three different physical communication links, namely SPI, PCIe, and shared memory, and therefore require different hardware support and driver support, as well as HAL (Hardware Abstraction Layer, hardware abstraction layer) layer encapsulation of respective underlying communication links provided by BSP (Board Support Package, board support package) engineers, so as to facilitate the use of these communication methods. These three methods each have their own advantages and disadvantages, and the most suitable method needs to be selected according to the scenario. A summary and comparison are as follows.

Advantages of SPI-based are as follows.

Good real-time performance: the SPI communication is implemented based on a hardware interface, has a relatively high speed, and is suitable for communication scenarios with relatively high real-time requirements. High security: the SPI communication is implemented based on a hardware interface, has relatively high communication security, and is not easily exploited by malicious programs or attackers for illegal operations. Stable and reliable: the SPI communication is implemented based on a hardware interface, has relatively high stability and reliability, and is not prone to problems such as deadlock and contention.

Disadvantages of SPI-based are as follows.

High hardware cost: the SPI communication requires support of a hardware interface, and therefore the hardware cost is relatively high, making it unsuitable for low-cost communication scenarios. Short transmission distance: a transmission distance of the SPI communication is relatively short, making it unsuitable for use in long-distance communication scenarios. Complex interface: the interface of the SPI communication is relatively complex, requiring a relatively high technical level for development and debugging.

Advantages of PCIe-based are as follows.

Fast transmission speed: the PCIe bus has a high speed and a large transmission bandwidth, making it suitable for high-speed data transmission. High reliability: the PCIe bus is stable and reliable, and is not prone to problems such as deadlock and contention. Support for hot swapping: the PCIe bus supports hot swapping, facilitating the addition and replacement of hardware.

Disadvantages of PCIe-based are as follows.

High hardware cost: the PCIe bus requires dedicated hardware support, and therefore the hardware cost is relatively high, making it unsuitable for low-cost communication scenarios. Transmission distance limitation: a transmission distance of the PCIe bus is limited, making it unsuitable for use in long-distance communication scenarios. Complex interface: the interface of the PCIe bus is relatively complex, requiring a relatively high technical level for development and debugging.

Advantages of shared memory-based are as follows.

Relatively fast speed: the shared memory is shared between different processes in the same physical memory, and therefore the access speed is relatively fast, making it suitable for communication scenarios with relatively large data volumes. Simple and easy to use: the implementation of shared memory is relatively simple, and the communication interface is easy to write and debug. High reliability: access to the shared memory is managed by the operating system, which can ensure the correctness and synchronization of data.

Disadvantages of shared memory-based are as follows.

Relatively poor real-time performance: since access to the shared memory is managed by the operating system, the real-time performance is relatively poor, making it unsuitable for communication scenarios with relatively high real-time requirements. Prone to contention: since a plurality of processes can access the shared memory simultaneously, problems such as contention and deadlock are prone to occur, requiring corresponding synchronization and mutual exclusion processing. Relatively poor security: access to the shared memory is unrestricted, making it easily exploited by malicious programs or attackers for illegal operations.

The above three physical communication links used for inter-core communication each have their own advantages and applicable scenarios. Application developers can select a more suitable communication method according to their own needs and access the API and SDK of this method. However, sometimes application developers need to use a plurality of types of inter-core communication simultaneously in order to satisfy the diversified needs of users, or the underlying developers of the inter-core communication function need to provide different inter-core communication for different application developers. In this case, this communication method appears to be insufficiently efficient and convenient in terms of implementing and providing implementation of one set of API and SDK. Moreover, when a new inter-core communication mechanism is added in the future, implementation of a new set of API and SDK must be implemented and maintained, resulting in poor maintainability and extensibility.

Therefore, the present application provides an inter-core communication method and apparatus, and a medium, an electronic device and a multi-core system.

The inter-core communication method and apparatus, and the medium, the electronic device and the multi-core system according to the embodiments of the present application are described below in combination with the accompanying drawings, where the same or similar reference numbers throughout denote the same or similar elements or elements having the same or similar functions. The embodiments described in combination with the accompanying drawings are exemplary and should not be construed as limiting the present application.

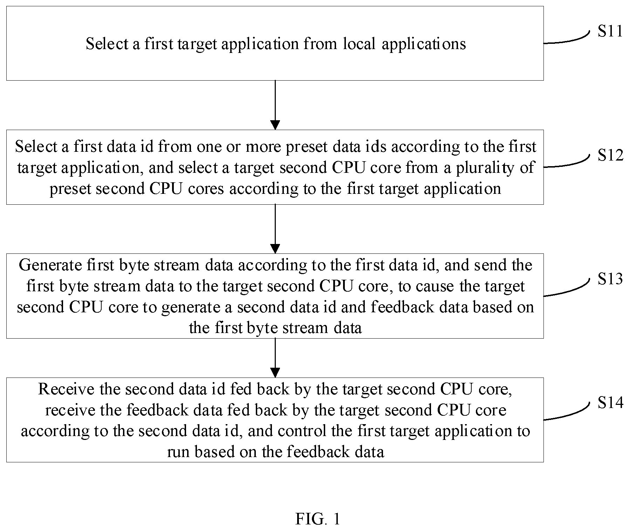

FIG. 1 is a flowchart of an inter-core communication method according to an embodiment of the present application.

In the embodiment of the present application, the inter-core communication method is applied to a first CPU core. The first CPU core may be any CPU core in a system having a plurality of CPU cores. The CPU cores in the system having the plurality of CPU cores may be heterogeneous or homogeneous, and operating systems mounted on the CPU cores may also be different. The system having the plurality of CPU cores may include one chip or a plurality of chips. Furthermore, at least one CPU core among the CPU cores in the system having the plurality of CPU cores other than the first CPU core is set as a preset second CPU core.

As shown in FIG. 1, the inter-core communication method includes the following steps.

S11, select a first target application from local applications.

Specifically, a plurality of local applications are provided on the first CPU core. Different local applications may need to communicate with different CPU cores in order to run. In order to realize communication with different CPU cores, the first CPU core needs to determine in advance the second CPU cores with which communication can be performed, and for each application, determine the second CPU core with which communication is needed for the application to run, and then make an agreement with the second CPU core to determine a data id used when the first CPU core communicates with the second CPU core while running the application. Through the agreement, the data ids sent to one another between the two CPU cores are made to match each other.

The data id corresponds to the local application. Different local applications use different data ids to communicate with the corresponding second CPU cores. One local application may correspond to one data id or to a plurality of data ids.

Since the data id is agreed upon in advance, through the data id, the first CPU core can inform the target second CPU core of the local application to be run currently, so that the target second CPU core can determine a function to be realized based on the application to be run and provide feedback data, thereby ensuring the stability and accuracy of the communication. Moreover, by agreeing upon the data id, it is supported that when the target second CPU core sends the feedback data to the first CPU core, the data id can be sent first, so that the first CPU core can determine the sender of the received data based on the data id, and the security of the received data can be ensured.

The data id is described below in combination with a specific example.

In this example, the data id includes three parts, which are respectively denoted as Priority, GroupId, and ElementId, where the size of Priority is 4 bits, the size of GroupId is 12 bits, and the size of ElementId is 16 bits. In this case, the data id is a uint32 integer.

Priority is the first 4 bits of the data id, GroupId is the middle 12 bits of the data id, and ElementId is the last 16 bits of the data id. Assuming that a data id is 0x30010001, the Priority of the data id is 3, the GroupId is 1, and the ElementId is 1.

The first 4 bits of the data id serve as a priority, which is used to identify a data priority.

The middle 12 bits serve as GroupId, which is used to distinguish data ids of different applications. Different applications use different GroupIds for distinction. That is, in this example, the correspondence between the data id and the local application means that the local application corresponds one-to-one to the GroupId in the data id.

The last 16 bits serve as a unique id of the same group of data, and 16 bits support a maximum of 65535 ElementIds for the same GroupId. The above-mentioned same group of data refers to data having the same GroupId.

After completing the agreement with each second CPU core, the first CPU core can select the first target application from the local applications to perform work. As an example, the first CPU core can determine a function to be implemented currently, and determine a local application for implementing the function to be implemented currently as the first target application.

S12, select a first data id from a plurality of preset data ids according to the first target application, and select a target second CPU core from one or more preset second CPU cores according to the first target application.

Specifically, after the first CPU core selects the first target application from the local applications, since the data id corresponds to the local application, the first CPU core can select, according to the first target application, the first data id corresponding thereto. Moreover, since different local applications use different data ids to communicate with the corresponding second CPU cores, the first CPU core can also select, according to the first target application, the target second CPU core corresponding thereto.

S13, generate first byte stream data according to the first data id, and send the first byte stream data to the target second CPU core, to cause the target second CPU core to generate a second data id and feedback data based on the first byte stream data.

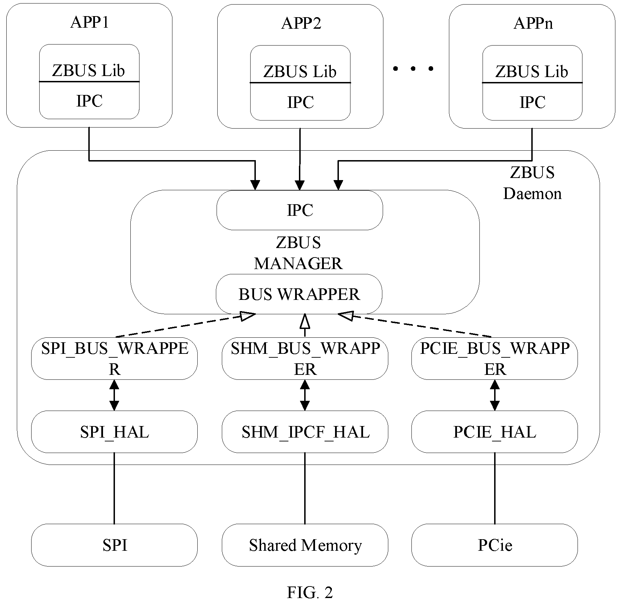

The sending of byte stream data between two CPU cores is described below in combination with the specific embodiment shown in FIG. 2.

Specifically, the overall system architecture design adopted for sending byte stream data shown in FIG. 2 is composed of two parts, including ZBUS Lib and ZBUS DAEMON.

ZBUS Lib is an interface library used by users for this method. The API provided by ZBUS Lib is a function call based on data ids. Through this interface, users can conveniently use the inter-CPU core communication mechanism to send and receive data. ZBUS Lib also internally includes an IPC (Inter-Process Communication, inter-process communication) component, which is used to communicate with the ZBUS DAEMON service that actually implements inter-core communication.

ZBUS DAEMON is a daemon process, which is mainly used to encapsulate various different inter-core communication functions and provide services for ZBUS Lib. It is mainly a ZBUS MANAGER, mainly including an IPC component and a BUS WRAPPER class instance. The BUS WRAPPER class is an abstract parent class, which defines a set of general interface definitions for inter-core communication operations such as SPI, PCIe, and shared memory. Its sub instance classes, namely SPI_BUS_WRAPPER, PCIE_BUS_WRAPPER, and SHM_BUS_WRAPPER, inherit the parent class BUS WRAPPER and implement respective inter-core communication functions. These specific instance classes perform data transmission and communication with respective underlying communication links through a HAL layer library provided by BSP developers. The HAL layer provides relevant drivers for operating the underlying hardware communication links and provides respective interfaces to the upper WRAPPER layer, so as to facilitate users in using the functions. The HAL layer includes SPI_HAL, SHM_IPCF_HAL, and PCIE_HAL, which are HAL layers corresponding to the physical communication links SPI, Shared Memory (shared memory), and PCIe, respectively. The specific inter-core communication provided by ZBUS DAEMON to users is mainly specified by a configuration file. If the configuration file is set to Shared Memory, then the process will provide a shared memory-based inter-core communication mechanism, and users can configure it according to their own scenarios.

When the inter-core communication method of the present application is used, the inter-core communication mode needs to be configured in the configuration file of ZBUS DAEMON, and the process needs to be deployed and started. Then, the application of the user can use the inter-core communication service provided by ZBUS DAEMON by accessing ZBUS Lib.

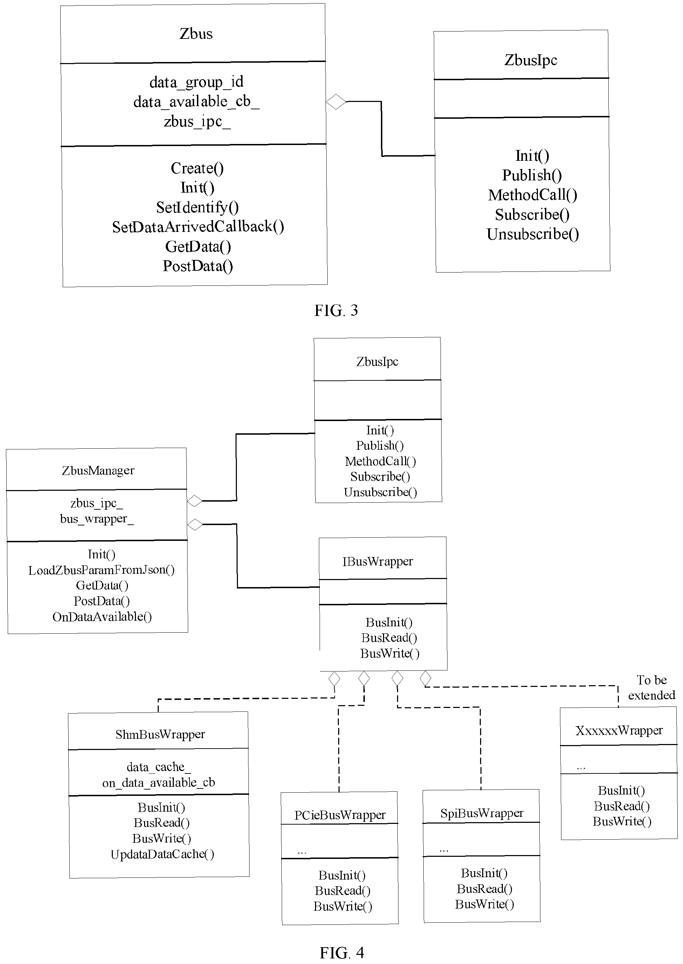

The key class diagram composition of ZBUS Lib can be seen in the example shown in FIG. 3. In FIG. 3, key data and functions are listed, and function parameters and types are omitted.

Specifically, ZBUS Lib is mainly composed of Zbus class and ZbusIpc class. Init() function in both Zbus and ZbusIpc is used to initialize the IPC instance.

Create() is a function for creating a zbus (i.e., the inter-core communication method of the present application) instance.

SetIdentify() is a function for setting data_group_id_ (i.e., the above GroupId), and different types of APPs have different GroupIds.

SetDataArrivedCallback() is a function for setting data_available_cb_ (i.e., the above callback function).

GetData() and PostData() are functions for calling MethodCall() in ZbusIpc.

zbus_Ipc_ is an instance of the class ZbusIpc, and the relationship between the two is a composition relationship. It is an encapsulation of an IPC middleware, whose underlying layer is iceoryx iceoryx, providing same-domain communication capability between vehicle-mounted system boards. Iceoryx is shared memory-based inter-process communication. This component can be replaced by other IPC components with the same function.

The main function of this IPC instance is to provide the same-domain communication capability with the ZBUS Daemon process. The ZBUS Daemon process also includes an IPC instance, which forms a pair of communication ends with the IPC instance of ZBUS Lib. In the ZbusIpc class, five key functions are listed.

Publish() implements message publishing, and is mainly used for ZBUS Daemon to notify ZBUS Lib that the data of the GroupId subscribed by it has arrived.

MethodCall() is a function for calling the Getdata() function and the PostData() function in the ZBUS Daemon at the IPC peer end, thereby realizing the GetData (data extraction) and PostData (data submission) functions of the API.

Subscribe() implements the message subscription function, and is mainly used for ZBUS Lib to subscribe to the data id of the GroupId corresponding to the APP from ZBUS Daemon. The cooperation of the Subscribe() and Publish() functions is mainly aimed at triggering the callback function data_available_cb_ set by the SetDataArrivedCallback function.

UnSubscribe() is used to cancel the subscription to the data id of the GroupId corresponding to the APP, and it is automatically called by ZBUS Lib at the end of the entire program.

For the design and implementation of ZBUS Daemon, reference can be made to the example shown in FIG. 4. Similarly, in FIG. 4, key data and functions are listed, and function parameters and types are omitted.

Specifically, ZBUS Daemon is mainly composed of three key class diagrams, including ZbusManager class (i.e., ZBUS_MANAGER in FIG. 2), ZbusIpc class (i.e., IPC in FIG. 2), and IBusWrapper class (i.e., BUS_WRAPPER in FIG. 2). The IBusWrapper class is an abstract class, using polymorphism and inheritance ideas of C++. The parent class abstracts a set of common interfaces for data sending and receiving, allowing a plurality of subclasses, namely ShmBusWrapper (i.e., SHM_BUS_WRAPPER in FIG. 2), PCieBusWrapper (i.e., PCIE_BUS_WRAPPER in FIG. 2), and SpiBusWrapper (i.e., SPI_BUS_WRAPPER in FIG. 2), to implement respective inter-core communications according to their own mechanisms. If a new inter-core communication method needs to be supported in the future, this abstract class can be inherited and implemented, such as XxxxxxWrapper class in FIG. 4. Therefore, the inter-core communication method of the present application has good extensibility and maintainability.

The specific functions of these key classes are described below.

The ZbusManager class is a management class of the entire ZBUS Daemon. Its function is to communicate with ZBUS Lib and manage a inter-core communication mode. It mainly includes two members, namely zbus_ipc_ and bus_wrapper_. zbus_ipc_ is an instance of the ZbusIpc class, which is similar to zbus_ipc_ in ZBUS Lib and is an IPC instance for ZBUS Daemon to communicate with ZBUS Lib. On the ZBUS Daemon side, the Publish function of IPC communication is mainly used to notify the peer ZBUS Lib that the data of a certain GroupId subscribed by it has arrived and is available.

The member bus_wrapper_ of ZbusManager is a pointer pointing to the parent class IBusWrapper, and its actual instance is one of the subclasses ShmBusWrapper, PCieWrapper, and SpiBusWrapper. The actual instance being which subclasse is associated with the inter-core communication mode specified in the configuration file. For example, if the inter-core communication mode is configured as Shm, then an inter-core communication mode in which a ShmBusWrapper is based on a shared memory is adopted; if the inter-core communication mode is configured as PCIe, then an inter-core communication mode in which a PCieWrapper is based on a PCIe bus is adopted; if the inter-core communication mode is configured as SPI, then an inter-core communication mode in which a SpiBusWrapper is based on a SPI bus is adopted. This class mainly includes five functions. Init() function is mainly used to initialize zbus when ZBUS Daemon is started, for example, calling LoadZbusParamFromJson() function to load the configuration file to specify a specific subclass for the member bus_wrapper_, so as to select a specific inter-core communication mode, and initializing the IPC member zbus_Ipc_. GetData() and PostData() can make reference to the corresponding functions in the above ZbusIpc class. OnDataAvailable() is used to execute the callback function.

The key data and functions of ZbusIpc class in ZBUS Daemon are consistent with the key data and functions of ZbusIpc class in ZBUS Lib.

The IBusWrapper class mainly abstracts three interfaces, which mainly define three main operations of inter-core communication. The first is initialization of resources on which inter-core communication depends, and is represented by a BusInit() interface. The second is sending data to a target core, and is represented by a BusWrite() interface. The third is receiving data from the target core, and is represented by a BusRead() interface. IBusWrapper abstracts and unifies interfaces of different inter-core communication mechanisms, and their subclasses implement these basic operation interfaces. Taking one of the subclasses, ShmBusWrapper, as an example, it mainly includes a data_cache_ member and a on_data_available_cb_ member. data_cache_ is a data cache module, and is used to cache data received by ShmBusWrapper from a peer core through the HAL layer SHM_IPCf_HAL. The other member, on_data_available_cb_, sets the member function OnDataAvailable of ZbusManager as on_data_available_cb_ when ZbusManager calls BusInit() for initialization. In this way, after the SHM_IPCf_HAL layer receives data, it updates the cache data_cache_ and triggers the call of on_data_available_cb_. A BusRead() interface implementation of ShmBusWrapper directly reads data from the data_cache_ cache. A BusWrite() interface implementation of ShmBusWrapper directly calls the data sending implementation of SHM_IPCf_HAL to send data.

The PCieWrapper class and the SpiBusWrapper class is different from the ShmBusWrapper class in that different HAL layers are accessed and different HAL layer calling methods are used when implementing BusInit(), BusWrite(), and BusRead().

It should be noted that when communication is performed between different CPU cores, a CPU core for sending data can send the data to be sent to a CPU core for receiving data through a target inter-core communication mode according to a preset operation mode, where the target inter-core communication mode is an inter-core communication mode selected from a plurality of preset inter-core communication modes, and the preset operation mode is an operation mode common to the plurality of preset inter-core communication modes.

If the above example is used for description, the plurality of preset inter-core communication modes include the above SPI, PCIe, shared memory, and other inter-core communication modes, and the target inter-core communication mode is the inter-core communication mode specified by the above configuration file. The preset operation mode includes operating the three interfaces abstracted by the above parent class IBusWrapper: BusInit(), BusWrite(), and BusRead(). That is, regardless of which inter-core communication mode is specified according to the configuration file, the first byte stream data can be sent to the target second CPU core through the target inter-core communication mode by using the preset operation mode.

Therefore, in order to send the first byte stream data to the target second CPU core, the first byte stream data can be sent to the target second CPU core through the target inter-core communication mode according to the preset operation mode.

S14, receive the second data id fed back by the target second CPU core, receive the feedback data fed back by the target second CPU core according to the second data id, and control the first target application to run based on the feedback data.

Specifically, the target second CPU core feeds back the second data id and the feedback data together. That is, the feedback data required by the first target application can be identified according to the second data id. With this design, if the first CPU core receives a plurality of data ids, it is necessary to determine the second data id from the plurality of data ids, determine the feedback data corresponding to the second data id as the feedback data required by the first target application, and then receive the feedback data corresponding to the second data id.

Thus, it is set to select a first target application from local applications; select a first data id from a plurality of preset data ids according to the first target application, and select a target second CPU core from one or more preset second CPU cores according to the first target application; generate first byte stream data according to the first data id, and send the first byte stream data to the target second CPU core, to cause the target second CPU core to generate a second data id and feedback data based on the first byte stream data; and receive the second data id fed back by the target second CPU core, receive the feedback data fed back by the target second CPU core according to the second data id, and control the first target application to run based on the feedback data. Since the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users, thereby realizing convenient inter-core communication and having high maintainability and extensibility.

In some embodiments of the present application, the generating the first byte stream data according to the first data id includes: obtaining a data structure corresponding to the first data id according to a preset correspondence, where the preset correspondence includes correspondences between a plurality of data ids and a plurality of data structures; and generating the first byte stream data according to the data structure.

A specific example is used below for description.

Specifically, in this example, one data id is set to correspond to one data structure in C language, and the data structure is used to carry data. An example is as follows:

```
     #define ZKOS_ZBUS_DID_NM_IntenalNodeOnline 0x30010001
     struct IntenalNodeEnum {
     uint8_t NodeEnum;
     };
     struct IntenalNodeOnline {
     IntenalNodeEnum IntenalNode;
     }
```

The above program means that the data id 0x30010001 corresponds to the data structure IntenalNodeOnline, and the data structure internally nests another data structure IntenalNodeEnum. When data is transmitted through inter-core communication, in the API for receiving data and sending data, it is set to obtain and send IntenalNodeOnline data according to the data id 0x30010001. The data id is identified by macro ZKOS_ZBUS_DID_NM_IntenalNodeOnline of C language, and the specific value of the macro is a hexadecimal number 0x30010001.

That is, after the first data id is determined, the general API needs to look up the corresponding data structure according to the first data id, generate the first byte stream data according to the data structure, and send the first byte stream data to the target second CPU core.

The above general API is described below in combination with a specific example.

Specifically, ZBUS Lib provides six interface functions in total, namely Function 1, Function 2, Function 3, Function 4, Function 5, and Function 6, which are respectively the following functions.
Function 1: static std::shared_ptr Zbus::Create().
Function 2: bool Zbus::Init().
Function 3: bool Zbus::SetIdentify(uin32_t GroupId).
Function 4: int Zbus::GetData(uint32_t data_id, void* buffer, uint32_t size).
Function 5: int Zbus::PostData(uint32_t data_id, void* buffer, uint32_t size).
Function 6: using OnDataAvailable = std::function<void(uint32_t id)>;
void Zbus::SetDataArrivedCallback(OnDataAvailable cb = nullptr).

Function 1 is used to: construct a new zbus instance and return its pointer. That is, before using the other five interface functions, the user needs to use this interface to obtain a zbus instance.

Function 2 is used to: load zbus-related configurations and initialize the zbus function, mainly load the IPC configuration file, and then initialize the IPC component for cross-process communication between IPC and ZBUS DAEMON.

Function 3 is used to: set the APP identity identification id, which is the GroupId in the above data id. Each different APP application has a different GroupId, and therefore its data id is also different. Only after the GroupId corresponding to the APP calling this API is set, a callback function OnDataAvailable of the data arrival notification set by calling the SetDataArrivedCallback function of the above Function 6 can take effect. That is, before using the interface function void Zbus::SetDataArrivedCallback(OnDataAvailable cb = nullptr), the interface bool Zbus::SetIdentify(uin32_t GroupId) must first be used, otherwise the program will not trigger the call.

Function 4 is used to: read the byte stream data of the data structure corresponding to the data id from ZBUS DAEMON into a preset buffer, where size is a space size of the preset buffer and needs to be greater than or equal to a byte size of the data structure corresponding to the data id. The function returns 0 for success and non-zero for failure.

Function 5 is used to: send the byte stream data of the data structure corresponding to the data id with a size being size in the preset buffer to the peer CPU core through ZBUS DAEMON. size needs to be greater than or equal to the byte size of the data structure corresponding to the data id. The function returns 0 for success and non-zero for failure.

Function 6 is used to enable that: through this function, the user APP registers a callback function for the arrival of data from the peer ZBUS DAEMON, and when the peer data is updated and available, processes the corresponding logic of the data id in the callback function registered by itself. The user sets the OnDataAvailable type passed by itself with the name cb through the SetDataArrivedCallback function. void Zbus::SetDataArrivedCallback(OnDataAvailable cb = nullptr) is used to process the corresponding logic of the data id in the registered callback function, and cb is a callback function of the type OnDataAvailable. SetDataArrivedCallback registers this cb function. The cb callback function is written by the user, and the user can write the corresponding logic for processing the data id by himself/herself, but the corresponding logic needs to be registered through SetDataArrivedCallback.

It should be noted that, for the above Function 4 and Function 5, it also needs to set the obtaining of the data structure according to the data id. For example, through preset settings, when the above data id 0x30010001 is received, the corresponding data structure IntenalNodeOnline is obtained and sent. The above Function 4 and Function 5 are general APIs.

In some embodiments of the present application, after the first CPU core receives second byte stream data sent by a third CPU core, the method further includes: selecting a second target application from the local applications according to the second byte stream data; and generating transmission data according to the second target application, selecting a fourth data id from the plurality of preset data ids according to the second target application, generating third byte stream data according to the fourth data id, and sending the transmission data and the third byte stream data to the third CPU core; where the sending the transmission data and the third byte stream data to the third CPU core includes: sending the transmission data and the third byte stream data to the third CPU core through a target inter-core communication mode according to a preset operation mode, where the target inter-core communication mode is an inter-core communication mode selected from a plurality of preset inter-core communication modes, and the preset operation mode is an operation mode common to the plurality of preset inter-core communication modes.

Specifically, the first CPU core may also serve as a CPU core with which other CPU cores communicate after determining their own functions to be implemented, and the other CPU cores that determine their own functions to be implemented are denoted as a third CPU core. That is, after confirming its own function to be implemented, the third CPU core determines an application for implementing the function to be implemented; and after determining that it needs to communicate with the first CPU core in order to implement the function to be implemented, the third CPU core generates the second byte stream data according to the data id corresponding to the application, and sends the second byte stream data to the first CPU core. At this time, after receiving the second byte stream data sent by the third CPU core, the first CPU core can obtain the corresponding data id according to the second byte stream data. Since the data id corresponds to the application, the second target application in the local applications for responding to the third CPU core can be determined according to the second byte stream data, and then the second target application can be controlled to run in a preset mode to obtain a running result, the running result is used as feedback data fed back by itself to the third CPU core, and the fourth data id is generated according to the second target application, the third byte stream data is generated according to the fourth data id, and the feedback data fed back to the third CPU core and the third byte stream data are sent to the third CPU core, so that the application in the third CPU core can run according to the feedback data fed back by the first CPU core.

In some embodiments of the present application, a communication mode between the first CPU core and the target second CPU core is a communication mode based on a shared memory, and the receiving the second data id fed back by the target second CPU core includes: checking whether a third data id exists in the shared memory; if the third data id exists in the shared memory, matching the third data id with the first data id, and taking the third data id that is successfully matched with the first data id as the second data id; and receiving the second data id.

Specifically, the first CPU core needs to check the situation of the shared memory. If shared data exists in the shared memory, it indicates that the second CPU core has sent data. At this time, the first CPU core needs to determine whether a data id exists in the shared data. If the data id exists in the shared data, the data id in the shared data is recorded as the third data id.

Moreover, since a plurality pieces of third data ids may exist in the shared memory, the first CPU core needs to determine the second data id from the plurality pieces of third data ids in the shared memory, and then receive the feedback data corresponding to the second data id. Specifically, the method for determining the second data id from the third data ids is to match the third data ids in the shared memory with the first data id, and take the successfully matched third data id as the second data id.

In some embodiments of the present application, both the first data id and the third data id include a group id, and the matching the third data id with the first data id includes: comparing the group id of the third data id with the group id of the first data id; and if the group id of the third data id is consistent with the group id of the first data id, determining that the third data id is successfully matched with the first data id.

Specifically, the above group id is the above GroupId. That is, if the third data id exists in the shared data, the GroupId of the third data id is obtained, and the obtained GroupId of the third data id is compared with the GroupId of the first data id. If the GroupId of a certain third data id is consistent with the GroupId of the first data id, it is determined that the third data id is successfully matched and is the second data id.

Of course, if the GroupIds of all third data ids in the shared memory are inconsistent with the GroupId of the first data id, it can be determined that the target second CPU core has not sent feedback data.

That is, the first CPU core needs to check the situation of the shared memory. If shared data exists in the shared memory, it is determined whether a data id exists in the shared data. If the data id exists in the shared data, the data id in the shared data is recorded as the third data id, and the GroupId of the third data id is compared with the GroupId of the first data id. If the GroupId of a certain third data id is consistent with the GroupId of the first data id, it is determined that the third data id is a valid data id.

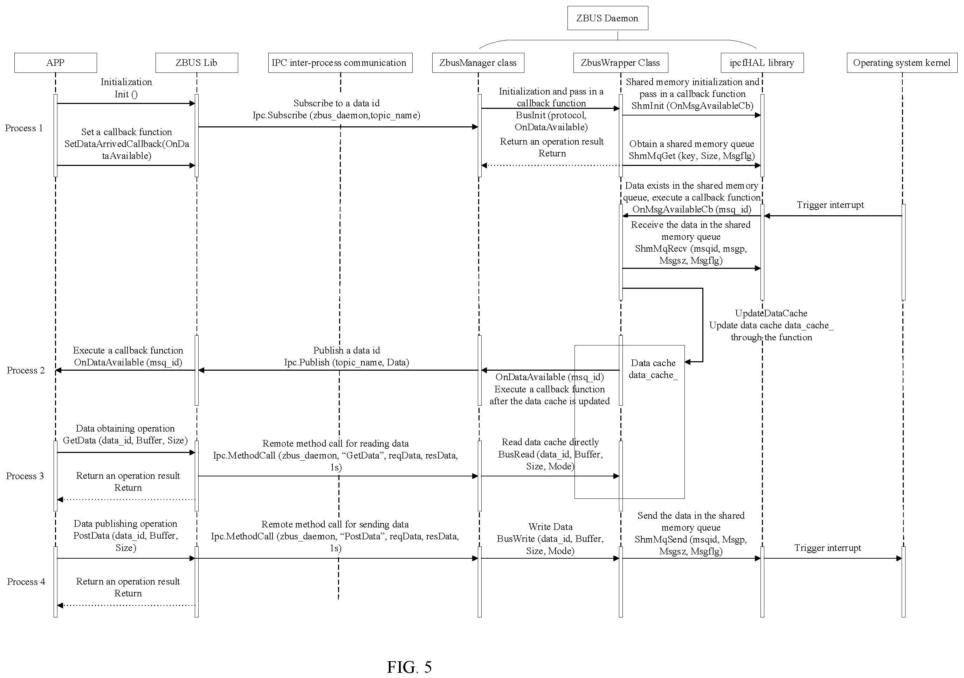

The above embodiments are described below in combination with the specific example shown in FIG. 5. In FIG. 5, the ZbusWrapper class is the above SHM_BUS_WRAPPER, the ipcfHAL library is the above SHM_IPCF_HAL, and the operating system kernel may be a Linux kernel. In FIG. 5, the functions used have the following meanings, respectively:
Init (), meaning initialization;
SetDataArrivedCallback(OnDataAvailable), meaning setting a callback function;
Ipc.Subscribe (zbus_daemon, topic_name), meaning subscribing to a data id;
BusInit (protocol, OnDataAvailable), meaning initialization and passing in a callback function;
Return, meaning returning an operation result;
ShmInit (OnMsgAvailableCb), meaning shared memory initialization and passing in a callback function;
ShmMqGet (key, size, msgflg), meaning obtaining a shared memory queue;
OnMsgAvailableCb (msq_id), meaning executing a callback function when data exists in the shared memory queue;
ShmMqRecv (msqid, msgp, msgsz, msgflg), meaning receiving the data in the shared memory queue;
UpdateDataCache, meaning updating a data cache data_cache_;
OnDataAvailable (msq_id), meaning executing a callback function after the data cache is updated;
Ipc.Publish (topic_name, data), meaning publishing a data id;
OnDataAvailable (msq_id), meaning executing a callback function;
GetData (data_id, buffer, size), meaning a data obtaining operation;
Ipc.MethodCall (zbus_daemon, "GetData", reqData, resData, 1s), meaning a remote method call for reading data;
BusRead (data_id, buffer, size, mode), meaning reading a data cache;
PostData (data_id, buffer, size), meaning a data sending operation;
Ipc.MethodCall (zbus_daemon, "PostData", reqData, resData, 1s), meaning a remote method call for sending data;
BusWrite (data_id, buffer, size, mode), meaning writing data; and
ShmMqSend (msqid, msgp, msgsz, msgflg), meaning sending data in a shared memory queue.

Flow 1 is initialization, which shows the initialization process after the APP using the ZBUS Lib and the ZBUS Daemon are started. It mainly includes configuration loading at both ends, IPC initialization, setting GroupId, data subscription of GroupId, and registering callback functions. For the APP to use the zbus function service, the ZBUS Daemon needs to be started before the APP.

Specifically, the APP first executes a function control for initialization and sets a callback function, and the ZBUS Lib sends a subscription data id, where the subscribed data id is the above first data id. After the ZbusManager class receives the subscribed data id, it controls to perform initialization and passes in the callback function. After the ZbusWrapper class receives the callback function, it performs shared memory initialization and passes the callback function to SHM_IPCF_HAL. Moreover, the ZbusWrapper class also needs to obtain a shared memory, determine whether shared data exists in the shared memory, and return a obtaining result to the ZbusManager class.

Flow 2 is data availability notification, which shows that when data of the peer core is available, the Linux Kernel triggers an interrupt, the ZBUS Daemon obtains data from the shared memory of the SHM_IPCF_HAL layer to the ZBUS Daemon of the current core, and updates it into the data_cache_ cache, and publishes an arrival notification of the data to the APP through IPC. Only when the GroupId of the APP is consistent with the GroupId to which the data belongs will the notification be received, thereby triggering the callback function for data availability registered by the APP.

Specifically, if the ZbusWrapper class determines that data exists in the shared memory, it executes a callback function, receives the data in the shared memory, and caches the received data into data_cache_. At this time, the ZbusManager class executes a callback function to obtain a published data id, where the published data id is the above second data id. Since a plurality of data ids may exist in the shared memory, it needs to compare the GroupId of the data ids in the shared memory with the GroupId of the first data id. If the GroupId of a certain data id is consistent with the GroupId of the first data id, it is determined that the data id is valid.

Flow 3 is data obtaining, which shows a process of the APP obtaining data, and user data is obtained from the cache of the ZBUS Daemon thorugh the IPC of the ZBUS Lib by calling function 4 in the above general API.

Specifically, the APP calls function 4 in the above general API to perform a data obtaining operation, and the ZBUS Lib obtains user data from data_cache_ through the ZbusManager class according to the operation. The user data is the above feedback data.

Flow 4 is data sending, which shows a process of the APP sending data, and data is transmitted to the ZBUS Daemon through the IPC of the ZBUS Lib by calling function 5 in the above general API, and the ZBUS Daemon finally calls ShmMqSend of SHM_IPCF_HAL through each layer to send the data to the shared memory and then notifies the peer core.

Specifically, the APP calls function 5 in the above general API to perform a data sending operation, and the ZBUS Lib sends data to the ZbusManager class according to the operation. After receiving the data, the ZbusManager class writes the data into the shared memory through the ZbusWrapper class.

The HAL layer SHM_IPCf_HAL of ShmBusWrapper provides a shared memory data link, and there are four key interface functions in the data operation interface provided by the shared memory data link, which are respectively the following function 7, function 8, function 9, and function 10, a total of four interface functions.

Function 7: bool ShmInit(ShmOnDataAvailable callback).

Function 8: int ShmMqGet(uint8_t key, uint32_t size, int msgflg).

Function 9: int ShmMqRecv(int msqid, void* msgp, uint32_t msgsz, enum ShmFlag msgflg).

Function 10: int ShmMqSend(int msqid, const void* msgp, uint32_t msgsz, enum ShmFlag msgflg).

Function 7 is used to: construct and initialize a shared memory, and set a callback function ShmOnDataAvailable triggered when shared data is available, so as to notify the upper layer that data can be read.

Function 8 is used to: obtain a shared memory queue with a node (node) size of size bytes, for receiving data and sending data. A return value is a queue id, and a specific value of the queue id is msqid.

Function 9 is used to: obtain data of a head node of the queue from the shared memory with the queue id of msqid.

Function 10 is used to: insert node data into a tail of the shared memory with the queue id of msqid.

In summary, in the inter-core communication method of the embodiments of the present application, it is set to select a first target application from local applications; select a first data id from a plurality of preset data ids according to the first target application, and select a target second CPU core from one or more preset second CPU cores according to the first target application; generate first byte stream data according to the first data id, and send the first byte stream data to the target second CPU core, to cause the target second CPU core to generate a second data id and feedback data based on the first byte stream data; and receive the second data id fed back by the target second CPU core, receive the feedback data fed back by the target second CPU core according to the second data id, and control the first target application to run based on the feedback data. Since the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users. Moreover, different underlying transmission communication links and mechanisms (such as shared memory, SPI physical bus, etc.) can be adapted, and users can select different communication links for different scenarios, and newly added inter-core communication mechanisms can be supported in future expansion, while the usage mode remains unchanged, with strong expandability and maintainability. The underlying link resources and operating system resources on which data transmission and reception depend are uniformly managed, which is imperceptible to users, ensures the security and orderliness of the system, improves the robustness of the entire system, avoids users from directly performing illegal operations on underlying resources, and ensures the security and stability of the system.

Based on the inter-core communication method of the above embodiments, the present application provides a computer-readable storage medium.

In an embodiment of the present application, a computer-readable storage medium has a computer program stored thereon, and when the computer program is executed by a processor, the above inter-core communication method is implemented.

In the computer-readable storage medium of the embodiment of the present application, by implementing the inter-core communication method of the above embodiments, the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users.

Based on the inter-core communication method of the above embodiments, the present application also provides an electronic device.

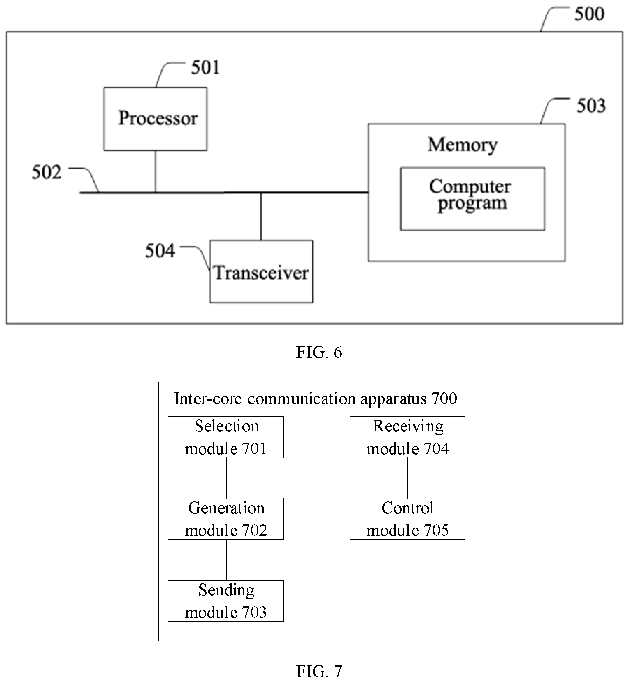

FIG. 6 is a structural block diagram of an electronic device according to an embodiment of the present application.

As shown in FIG. 6, the electronic device 500 includes: a processor 501 and a memory 503. The processor 501 and the memory 503 are connected, for example, through a bus 502. Optionally, the electronic device 500 may further include a transceiver 504. It should be noted that in practical applications, the number of the transceiver 504 is not limited to one, and the structure of the electronic device 500 does not constitute a limitation to the embodiments of the present application.

The processor 501 may be a CPU (Central Processing Unit, central processing unit), a general-purpose processor, a DSP (Digital Signal Processor, digital signal processor), an ASIC (Application Specific Integrated Circuit, application specific integrated circuit), an FPGA (Field Programmable Gate Array, field programmable gate array) or other programmable logic devices, transistor logic devices, hardware components, or any combination thereof. The processor 501 may implement or execute various exemplary logical blocks, modules, and circuits described in combination with the disclosure of the present application. The processor 501 may also be a combination for implementing computing functions, for example, a combination including one or more microprocessors, a combination of a DSP and a microprocessor, and the like.

The bus 502 may include a path for transmitting information between the above components. The bus 502 may be a PCI (Peripheral Component Interconnect, peripheral component interconnect) bus or an EISA (Extended Industry Standard Architecture, extended industry standard architecture) bus, etc. The bus 502 may be divided into an address bus, a data bus, a control bus, and the like. For ease of representation, only one thick line is used to represent the bus 502 in FIG. 5, but it does not indicate that there is only one bus or one type of bus.

The memory 503 is configured to store a computer program corresponding to the inter-core communication method of the above embodiments of the present application, and the computer program is controlled and executed by the processor 501. The processor 501 is configured to execute the computer program stored in the memory 503 to implement the contents shown in the above method embodiments.

The electronic device 500 shown in FIG. 6 is only an example and should not impose any limitation on the functions and using scope of the embodiments of the present application.

In the electronic device of the embodiment of the present application, by implementing the inter-core communication method of the above embodiments, the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users.

The present application also provides an inter-core communication apparatus.

FIG. 7 is a structural block diagram of an inter-core communication apparatus according to an embodiment of the present application.

As shown in FIG. 7, the inter-core communication apparatus 700 includes: a selection module 701, configured to select a first target application from local applications, select a first data id from a plurality of preset data ids according to the first target application, and select a target second CPU core from one or more preset second CPU cores according to the first target application; a generation module 702, configured to generate first byte stream data according to the first data id; a sending module 703, configured to send the first byte stream data to the target second CPU core, to cause the target second CPU core to generate a second data id and feedback data based on the first byte stream data; a receiving module 704, configured to receive the second data id fed back by the target second CPU core, and receive the feedback data fed back by the target second CPU core according to the second data id; and a control module 705, configured to control the first target application to run based on the feedback data.

In some embodiments of the present application, the selecting the first target application from the local applications includes: determining a function to be implemented currently, and determining a local application for implementing the function to be implemented currently as the first target application.

In some embodiments of the present application, the generating the first byte stream data according to the first data id includes: obtaining a data structure corresponding to the first data id according to a preset correspondence, where the preset correspondence includes correspondences between a plurality of data ids and a plurality of data structures; and generating the first byte stream data according to the data structure.

In some embodiments of the present application, a communication mode between the first CPU core and the target second CPU core is a communication mode based on a shared memory, and the receiving the second data id fed back by the target second CPU core includes: checking whether a third data id exists in the shared memory; if the third data id exists in the shared memory, determining the second data id according to the third data id; and receiving the second data id.

In some embodiments of the present application, both the first data id and the third data id include a group id, and the determining the second data id according to the third data id includes: comparing the group id of the third data id with the group id of the first data id; and if the group id of the third data id is consistent with the group id of the first data id, determining the third data id as the second data id.

In some embodiments of the present application, after the first CPU core receives second byte stream data sent by a third CPU core, the method further includes: selecting a second target application from the local applications according to the second byte stream data; and generating transmission data according to the second target application, selecting a fourth data id from the plurality of preset data ids according to the second target application, generating third byte stream data according to the fourth data id, and sending the transmission data and the third byte stream data to the third CPU core; where the sending the transmission data and the third byte stream data to the third CPU core includes: sending the transmission data and the third byte stream data to the third CPU core through a target inter-core communication mode according to a preset operation mode, where the target inter-core communication mode is an inter-core communication mode selected from a plurality of preset inter-core communication modes, and the preset operation mode is an operation mode common to the plurality of preset inter-core communication modes.

It should be noted that for other specific implementation modes of the inter-core communication apparatus of the embodiments of the present application, reference may be made to the inter-core communication method of the above embodiments.

In the inter-core communication apparatus of the embodiment of the present application, the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users.

The present application also provides a multi-core system.

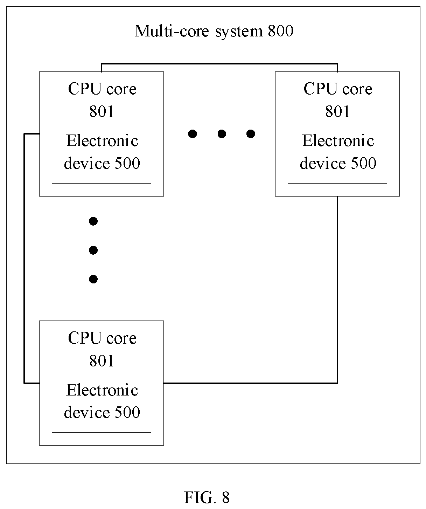

FIG. 8 is a structural block diagram of a multi-core system according to an embodiment of the present application.

As shown in FIG. 8, the multi-core system 800 includes a plurality of CPU cores 801, where for any CPU core 801 among the plurality of CPU cores 801, the electronic device 500 of the above embodiment is included.

In the multi-core system of the embodiment of the present application, the data id used for communication and the second CPU core used for communication are both set to correspond to the local applications. Therefore, after the first target application is determined, the first data id and the target second CPU core applied in the actual communication can be determined according to the first target application, and communication with the target second CPU core is performed through the first data id. Since the data id is used for communication with the second CPU core, standardized processing of communication information between the first CPU core and the second CPU core can be realized, thereby supporting setting of a general API and providing a unified inter-core communication interface for upper-layer users, i.e., a set of API and SDK, which greatly facilitates the use by upper-layer development users.

It should be noted that the logic and/or steps represented in the flowcharts or described in other ways herein can be considered as an ordered list of executable instructions for implementing logical functions, and can be embodied in any computer-readable medium for use by an instruction execution system, apparatus, or device (such as a computer-based system, a system including a processor, or other systems that can fetch and execute instructions from an instruction execution system, apparatus, or device), or in combination with the instruction execution system, apparatus, or device. For the purposes of this specification, a "computer-readable medium" can be any apparatus that can contain, store, communicate, propagate, or transmit a program for use by an instruction execution system, apparatus, or device, or in combination with the instruction execution system, apparatus, or device. More specific examples (a non-exhaustive list) of the computer-readable medium include the following: an electrical connection portion having one or more wires (electronic apparatus), a portable computer disk cartridge (magnetic apparatus), a random access memory (RAM), a read-only memory (ROM), an erasable programmable read-only memory (EPROM or flash memory), an optical fiber device, and a portable compact disc read-only memory (CDROM). In addition, the computer-readable medium may even be paper or other suitable medium on which the program can be printed, because the program can be obtained electronically by, for example, optically scanning the paper or other medium, followed by editing, interpreting, or processing in other suitable ways when necessary, and then stored in a computer memory.

It should be understood that various parts of the present application may be implemented by hardware, software, firmware, or a combination thereof. In the above implementations, a plurality of steps or methods may be implemented by software or firmware stored in a memory and executed by a suitable instruction execution system. If implemented by hardware, as in another implementation mode, it may be implemented by any one or a combination of the following techniques well-known in the art: discrete logic circuits having logic gate circuits for implementing logic functions on data signals, application-specific integrated circuits having suitable combinational logic gate circuits, programmable gate arrays (PGA), field programmable gate arrays (FPGA), etc.

In the description of this specification, descriptions in combination with the terms "one embodiment," "some embodiments," "example," "specific example," or "some examples" and the like mean that specific features, structures, materials, or characteristics described in combination with the embodiment or example are included in at least one embodiment or example of the present application. In this specification, the schematic representations of the above terms do not necessarily refer to the same embodiment or example. Moreover, the described specific features, structures, materials, or characteristics may be combined in any suitable manner in any one or more embodiments or examples.

In the description of this specification, the terms "center," "longitudinal," "lateral," "length," "width," "thickness," "upper," "lower," "front," "rear," "left," "right," "vertical," "horizontal," "top," "bottom," "inner," "outer," "clockwise," "counterclockwise," "axial," "radial," "circumferential," and the like indicate orientations or positional relationships based on the orientations or positional relationships shown in the drawings, and are not intended to indicate or imply that the referred apparatus or element must have a specific orientation, be constructed and operated in a specific orientation, and cannot be construed as limiting the present application.

In addition, the terms "first" and "second" are used for descriptive purposes only and cannot be understood as indicating or implying relative importance or implicitly indicating the number of the indicated technical features. Thus, features defined by "first" and "second" may explicitly or implicitly include at least one of the features. In the description of the present application, "a plurality of" means at least two, such as two, three, etc., unless otherwise explicitly and specifically limited.

In the description of this specification, unless otherwise specified, the terms "mounted," "connected," "connection," "fixed," and the like should be understood in a broad sense. For example, it may be a fixed connection, a detachable connection, or an integral connection; it may be a mechanical connection or an electrical connection; it may be a direct connection or an indirect connection through an intermediate medium, and it may be the internal communication of two elements or the interaction relationship between two elements, unless otherwise explicitly limited. For those of ordinary skill in the art, the specific meanings of the above terms in the present application can be understood according to specific circumstances.

In the present application, unless otherwise explicitly specified and limited, a first feature being "on" or "under" a second feature may be that the first and second features are in direct contact, or the first and second features are in indirect contact through an intermediate medium. Moreover, a first feature being "above," "over," and "on top of" a second feature may be that the first feature is directly above or obliquely above the second feature, or merely indicates that the horizontal height of the first feature is higher than that of the second feature. A first feature being "below," "under," and "beneath" a second feature may be that the first feature is directly below or obliquely below the second feature, or merely indicates that the horizontal height of the first feature is less than that of the second feature.

Although the embodiments of the present application have been shown and described above, it can be understood that the above embodiments are exemplary and cannot be construed as limiting the present application. Those of ordinary skill in the art can make changes, modifications, substitutions, and variations to the above embodiments within the scope of the present application.

## Claims

1. An inter-core communication method, applied to a first CPU core, and comprising:
selecting a first target application from local applications;
selecting a first data id from a plurality of preset data ids according to the first target application, and selecting a target second CPU core from one or more preset second CPU cores according to the first target application;
generating first byte stream data according to the first data id, and sending the first byte stream data to the target second CPU core, to cause the target second CPU core to generate a second data id and feedback data based on the first byte stream data; and
receiving the second data id fed back by the target second CPU core, receiving the feedback data fed back by the target second CPU core according to the second data id, and controlling the first target application to run based on the feedback data.

2. The inter-core communication method according to claim 1, wherein the selecting the first target application from the local applications comprises:
determining a function to be implemented currently, and determining a local application for implementing the function to be implemented currently as the first target application.

3. The inter-core communication method according to claim 1, wherein the generating the first byte stream data according to the first data id comprises:
obtaining a data structure corresponding to the first data id according to a preset correspondence, wherein the preset correspondence comprises correspondences between a plurality of data ids and a plurality of data structures; and
generating the first byte stream data according to the data structure.

4. The inter-core communication method according to claim 1, wherein a communication mode between the first CPU core and the target second CPU core is a communication mode based on a shared memory, and the receiving the second data id fed back by the target second CPU core comprises:
checking whether a third data id exists in the shared memory;
if the third data id exists in the shared memory, matching the third data id with the first data id, and taking the third data id that is successfully matched with the first data id as the second data id; and
receiving the second data id.

5. The inter-core communication method according to claim 4, wherein both the first data id and the third data id comprise a group id, and the matching the third data id with the first data id comprises:
comparing the group id of the third data id with the group id of the first data id; and if the group id of the third data id is consistent with the group id of the first data id, determining that the third data id is successfully matched with the first data id.

6. The inter-core communication method according to claim 1, wherein after the first CPU core receives second byte stream data sent by a third CPU core, the method further comprises:
selecting a second target application from the local applications according to the second byte stream data; and
generating transmission data according to the second target application, selecting a fourth data id from the plurality of preset data ids according to the second target application, generating third byte stream data according to the fourth data id, and sending the transmission data and the third byte stream data to the third CPU core;
wherein the sending the transmission data and the third byte stream data to the third CPU core comprises:
sending the transmission data and the third byte stream data to the third CPU core through a target inter-core communication mode according to a preset operation mode, wherein the target inter-core communication mode is an inter-core communication mode selected from a plurality of preset inter-core communication modes, and the preset operation mode is an operation mode common to the plurality of preset inter-core communication modes.

7. A computer-readable storage medium, having a computer program stored thereon, wherein when the computer program is executed by a processor, the inter-core communication method according to any one of claims 1-6 is implemented.

8. An electronic device, comprising a memory, a processor, and a computer program stored on the memory and executable on the processor, wherein when the computer program is executed by the processor, the inter-core communication method according to any one of claims 1-6 is implemented.

9. An inter-core communication apparatus, comprising:
a selection module, configured to select a first target application from local applications, select a first data id from a plurality of preset data ids according to the first target application, and select a target second CPU core from one or more preset second CPU cores according to the first target application;
a generation module, configured to generate first byte stream data according to the first data id;
a sending module, configured to send the first byte stream data to the target second CPU core, to cause the target second CPU core to generate a second data id and feedback data based on the first byte stream data;
a receiving module, configured to receive the second data id fed back by the target second CPU core, and receive the feedback data fed back by the target second CPU core according to the second data id; and
a control module, configured to control the first target application to run based on the feedback data.

10. A multi-core system, comprising a plurality of CPU cores, wherein for any one CPU core among the plurality of CPU cores, the electronic device according to claim 8 is comprised.
